# NEUE EUROPÄISCHE PATENTSCHRIFT

(11) **EP 0 163 774 B2**
(45) Veröffentlichungstag und Bekanntmachung des Hinweises auf die Entscheidung über den Einspruch: **12.01.1994**
(45) Hinweis auf die Patenterteilung: 27.06.1990
(21) Anmeldenummer: 84116242.3
(22) Anmeldetag: 22.12.1984
(51) Int. Cl.: B60T 17/22, B60T 13/66

(54) **Druckmittel-Fahrzeugbremsanlage**
Pressure operated vehicle brake installation
Installation de freinage actionnée par pression pour véhicules

(30) Priorität: 07.05.1984 DE 3416723
(43) Veröffentlichungstag der Anmeldung: 11.12.1985
(73) Patentinhaber: ROBERT BOSCH GMBH, 70442 Stuttgart (DE)
(72) Erfinder: Grauel, Ingolf, Dipl.-Ing., D-7143 Vaihingen/Enz (DE); Müller, Egbert, Dr.-Ing., D-7147 Hochdorf (DE); Stumpe, Werner, Ing., D-7014 Kornwestheim (DE)

(56) Entgegenhaltungen:
- EP-A- 82 916
- DE-A- 2 622 746
- DE-A- 3 027 747
- DE-A- 3 205 228
- DE-A- 3 230 970
- DE-A- 3 337 800

## Beschreibung

### Stand der Technik

Die Erfindung geht aus von einer Fahrzeugbremsanlage nach der Gattung des Hauptanspruchs.

Eine solche Fahrzeugbremsanlage, die aus der DE-A-33 37 800 bekannt ist. hat den Vorteil, daß deren Elektromagnete, die zum Schalten einer Ventilkombination bestimmt sind, nur während Bremsdruckänderungen von elektrischen Steuerströmen durchflossen werden. Infolgedessen können die Elektromagnete klein ausgebildet und billig hergestellt werden. Desweiteren hat diese Fahrzeugbremsanlage den Vorteil, daß bei Ausfall von elektrisch arbeitenden Komponenten der Fahrzeugbremsanlage mittels ein und desselben Bremspedals Notbremsunaen steuerbar sind.

Durch geeignete Ausbildung eines der Ventilkombination zugeordneten elektrischen Steuergerätes ist ein ein kanaliger Blockierschutzbetrieb möglich. Das heißt, daß mittels dieser einzigen Ventilkombination für alle Bremszylinder gleichzeitig Bremsdrücke aufgebaut, gehalten sowie abgesenkt werden können.

Beispielsweise infolge von links und rechts unterschiedlichen Kolbenhüben in den Radbremszylindern und/oder von unsymmetrischen Leitungsanordnungen (Unterschiede bezüglich Leitungslängen und/oder Umlenkstellen zwischen den Ventilen und den Radbremszylindern) finden unterschiedliche Bremsdruckabsenkgeschwindigkeiten und demzufolge Bremskraftunterschiede zwischen links und rechts statt. Diese Bremskraftunterschiede sind nachteilig, denn sie bewirken ein Gieren des Fahrzeugs mit Kursabweichung, die durch den Fahrer zu korrigieren ist. Inbesondere stören Bremskraftunterschiede zwischen links und rechts beim Lenken, wenn die Bremskraftunterschiede an den gelenkten Radern zustande kommen. Selbst wenn seitenweise den Radbremszylindern vorbekannte Drei-Stellungsventile zugeordnet werden wie dies aus der DE-A-2622746 bekannt ist, ist der genannte Nachteil nicht immer ausschließbar.

Es stellte sich die Aufgabe, diesen Nachteil zu vermeiden.

Die Merkmale des Patentanspruchs lösen diese Aufgabe und ergeben eine verbesserte Beherrschbarkeit und verbesserte Lenkbarkeit des Fahrzeugs.

### Vorteile der Erfindung

Die erfindungsgemäße Bremsanlage mit den kennzeichnenden Merkmalen des Hauptanspruchs hat den Vorteil, daß geringe oder wechselnde Fahrbahngriffigkeit nicht zum Blockieren von Rädern und den daraus resultierenden Nachteilen führt.

Die aufgeführte Maßnahme behält den Vorteil bei, daß zumindest ein Teil der für automatische Bremsschlupfverminderung bestimmten Bestandteile der Ventilkombination auch während Normalbremsungen betätigt wird. Dadurch wird sowohl ein Festhängen von Ventilbestandteilen vermieden als auch eine gegebenenfalls auftretende Fehlfunktion schon während Normalbremsungen beispielsweise über zu langsamen Bremsdruckabbau erkannt.

### Zeichnung

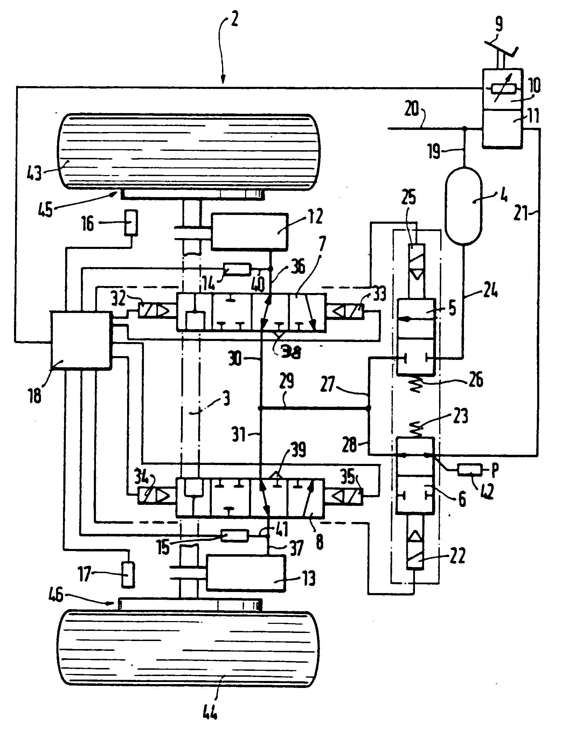

Ein Ausführungsbeispiel der erfindungsgemäßen Druckmittel-Fahrzeugbremsanlage ist in der Zeichnung dargestellt und nachfolgend näher erläutert.

### Beschreibung des Ausführungsbeispiels

Aus Gründen einer guten Übersichtlichkeit ist die Druckmittel-Fahrzeugbremsanlage 2 unter Einbeziehung von nur einer Fahrzeugachse 3 dargestellt. Dieses Teil der Fahrzeugbremsanlage hat einen Druckmittelspeicherbehälter 4, eine aus vier Ventilen 5, 6, 7, 8 zusammengesetzte Ventilkombination, ein Bremspedal 9, einen elektrischen Bremsdrucksollwertgeber 10, einen Notbremsdruckgeber 11, zwei Radbremszylinder 12, 13, zwei Druckfühler 14, 15, zwei Raddrehungssensoren 16, 17 und ein elektrisches Steuergerät 18. Die Ventile 5 und 6 können zu einer Baueinheit zusammengefaßt sein oder beispielsweise durch ein 3/2-Ventil ersetzt werden.

Der Druckmittelspeicherbehälter 4 ist über eine Leitung 19 an eine Druckmittelversorgungsleitung 20, in die eine nicht dargestellte Pumpe ein Druckmittel hineinfördert, angeschlossen. Ebenfalls an die Druckmittelversorgungsleitung 20 ist der Notbremsdruckgeber 11 angeschlossen. Er ist in an sich bekannter Weise als Drucksteuerventil ausgebildet und mittels des Bremspedals 9 betätigbar. Von dem Notbremsdruckgeber 11 führt eine Leitung 21 zu dem Ventil 6, das als 2/2-Ventil ausgebildet ist. Dieses Ventil 6 besitzt zu seiner Betätigung einen Elektromagnet 22. In stromlosem Zustand dieses Elektromagnets 22 ist das Ventil 6 mittels einer Feder 23 auf Durchlaß geschaltet. Das Ventil 5 ist über eine Leitung 24 an den Druckmittelspeicherbehälter 4 angeschlossen und besitzt zu seiner Betätigung einen Elektromagnet 25 und eine Feder 26. In stromlosen Zustand des Elektromagnets 25 steuert die Feder 26 das Ventil 5 in seine Sperrstellung. Beide Ventile 5, 6 können in bekannterweise druckunterstützt geschaltet werden, um eine hohe Schaltleistung zu erreichen. Von den Ventilen 5 und 6 gehen Leitungen 27 bzw. 28 aus, die in eine Sammelleitung 29 münden. Von dieser Sammelleitung 29 verlaufen Leitungen 30, 31 zu den Ventilen 7 und 8. Die Ventile 7, 8 sind als 3/4-Ventile ausgebildet und haben zu ihrer Betätigung jeweils zwei Elektromagnete 32, 33 bzw. 34 und 35. In stromlosen Zustand dieser Elektromagnete sind die Ventile 7, 8 auf Durchlaß geschaltet. Von diesen Ventilen 7, 8 führen Leitungen 36, 37 zu den Radbremszylindern 12 und 13. Strombeaufschlagung der Elektromagnete 33 und 35 bewirkt ein Umschalten der Ventile 7, 8 in deren Sperrstellungen; das Erregen der Elektromagnete 32, 33 und 34, 35 bewirkt ein Umschalten der Ventile 7, 8 in Druckabsenkstellungen. In diesen Druckabsenkstellungen sperren die Ventile 7, 8 die Leitungen 30, 31 und verbinden die Leitungen 36, 37 mit Ventilauslässen 38, 39. Erregen der Magnete 32 und 34 führt zu Druckabsenkstellungen zwecks Druckabsenkung den Bremszylindern 12, 13 und den Leitungen 30, 31, 29, 27, 28. Über Anzapfleitungen 40, 41 sind die Druckfühler 14, 15 mit den Leitungen 36, 37 verbunden. Ein weiterer Druckfühler 42, der Bestandteil einer nicht dargestellten Warnanlage ist, ist eingangsseitig mit dem Ventil 6 verbunden.

Die Fahrzeugachse 3 hat ein rechtes Rad 43 und ein linkes Rad 44. Dem Rad 43 ist eine Trommelbremse 45, die mittels des Radbremsyzlinders 12 betätigbar ist, zugeordnet. In gleicher Weise ist dem Rad 44 eine mittels des Radbremszylinder 13 betätigbare Radbremse 46 zugeordnet. Desweiteren sind den Rädern 43, 44 die Raddrehungssensoren 16, 17 zugeordnet. Diese sind in an sich bekannter Weise beispielsweise als Induktivgeber ausgebildet und gegenüber nicht dargestellten Zähnen aus Stahl oder Eisen, die mit den Rädern 43, 44 umlaufen, angeordnet.

Zur Betriebsbremsbetätigung wird mittels des Bremspedals 9 der elektrische Bremsdrucksollwertgeber 10 vom Fahrzeuglenker entsprechend einer gewünschten Bremskraft verstellt. Der eingestellte Bremsdrucksollwert gelangt in das elektrische Steuergerät 18. Dieses Steuergerät 18 vergleicht laufend Istwertanzeigen, die aufgrund von Drücken in den Radbremszylindern 12, 13 in den Druckfühlern 14, 15 erzeugt werden, mit dem Bremsdrucksollwert. Ergeben Vergleiche, daß die Istwerte niedriger liegen als der Bremsdrucksollwert, so erregt das Steuergerät den Elektromagneten 22. Durch Betätigen des Bremsdrucksollwertgebers wurde auch der Elektromagnet 25 erregt. Infolge der Erregung der Elektromagnete 22, 25 wird das Ventil 6 gesperrt und das Ventil 5 geöffnet, so daß Druckmittel aus dem Druckmittelspeicherbehälter 4 durch die Ventile 7 und 8 hindurch in die Radbremszylinder 12 und 13 strömt. Infolgedessen steigen die Drücke in den Radbremszylindern 12 und 13 an, wodurch über die Druckfühler 14 und 15 dem Steuergerät 18 ansteigende Istwerte gemeldet werden. Fallen Vergleiche zwischen diesen Istwerten und dem Bremsdrucksollwert so aus, daß keine Unterschiede mehr bestehen, so unterbricht das Steuergerät die Stromzufuhr zu dem Magnet 25, so daß das Ventil 5 von der Feder 26 und/oder druckunterstützt geschlossen wird und kein weiterer Druckanstieg in den Radbremszylindern 12 und 13 erfolgt. Das Ventil 6 bleibt in die Sperrstellung geschaltet. Steigen die Drücke in den Druckfühlern 14, 15 ungleich schnell an, so steuert das Steuergerät 18 vorübergehend dasjenige der Ventile 7,8 in seine Druckhaltestellung, das dem Druckfühler, der den Sollwert zuerst anzeigt, zugeordnet ist. Wird durch teilweises oder vollständiges Zurücknehmen des Bremspedals 9 der Bremsdrucksollwert vermindert, so erkennt das Steuergerät 18, daß die Istwerte höher als gewünscht liegen. Deshalb wird das Steuergerät die Elektromagnete 32, 33, 34, 35 erregen, oder auch nur die Magnete 32, 34, so daß die Ventile 7 und 8 in eine der Druckabsenkstellungen gesteuert werden, was davon abhängt, ob ein- oder beidseitig abgesenkt werden soll. Dadurch strömt Druckmittel aus den Radbremszylindern 12 und 13 über die Leitungen 36 und 37 zu den Ventilauslässen 38 und 39. Dies bewirkt über die Druckfühler 14 und 15 kleiner werdende Istwerte. Schließlich sind diese Istwerte so klein geworden, daß sie mit dem Bremsdrucksollwert übereinstimmen und demzufolge das Steuergerät 18 die Stromzufuhr zu den Elektromagneten 32, 33 bzw. 34, 35 abbricht. Nach vollständigem Zurücknehmen des Bremspedals 9 wird auch der Strom zum Elektromagnet 22 abgeschaltet und das Ventil 6 schaltet durch Druck und/oder die Feder 23 unterstützt zurück in seine Durchlaßstellung. Das vorstehend Beschriebene gilt für Betriebsbremsungen bei fehlerfreien Ventilen 5, 6, 7, 8 und Druckfühlern 14, 15 und fehlerfreiem und mit Strom versorgtem Steuergerät 18.

Treten Fehler in dem Steuergerät 18 oder bei dessen nicht dargestellter Stromversorgung auf, so verbleiben die Ventile 5, 6, 7, 8 in den dargestellten und beschriebenen Grundstellungen. Infolgedessen wird ein mittels des Bremspedals 9 über den Notbremsdruckgeber 11 in die Leitung 21 eingesteuerter Druck durch das geöffnete Ventil 6 zu den Radbremszylindern 12, 13 gelangen und die erforderliche Notbremsung bewirken.

Wird eine übliche Betriebsbremsung über den elektrischen Bremsdrucksollwertgeber 10 eingeleitet und schließlich der Bremsdrucksollwert so weit gesteigert, daß die Reibgrenze an wenigstens einem der Räder 43, 44 relativ zur Fahrbahn überschritten wird, dann liefern die Raddrehungssensoren 16 und/oder 17 an das Steuergerät 18 Signale, die deutlich geringere Raddrehzahlen anzeigen als diejenige, die bei frei rollenden Rädern der gefahrenen Geschwindigkeit zugeordnet ist. Infolgedessen wird das Steuergerät 18 das Ventil 7 oder 8, das dem unzulässig schlüpfenden Rad 43 oder 44 zugeordnet ist, so lange in die Druckabsenkstellung steuern bis der Radschlupf beendet ist. Dabei dominieren im Steuergerät 18 Signale aus den Raddrehungssensoren 16 und/oder 17 über Druckistwerte aus den Druckfühlern 14 und/oder 15. Danach kehrt das betreffende Ventil 7 oder 8 in seine Grundstellung zurück, wodurch die auf das betreffende Rad wirkenden Bremskräfte wieder ansteigen. Schließlich kann sich das Spiel des Druckabbauens, Druckhaltens und Druckabbauens entsprechend den bekannten ABS-Regelalgorithmen wiederholen. Dadurch wird dann derjenige Druck in dem Radbremszylinder 12 bzw. 13, der gerade keinen Radschlupf mehr bewirkt, beibehalten. Je nach Regelalgorhitmus, nach dem das Steuergerät 18 arbeitet, kann nach bestimmten Wartezeiten das Ventil 7 und auch das Ventil 8 erneut in die Durchlaßstellung gesteuert werden, um zumindest eine geringfügige Drucksteigerung zu erzielen. Dies ist wichtig für den Fall, daß Reibwerte zwischen den Rädern 43, 44 und der Fahrbahn besser werden. Die Raddrehungssensoren 16, 17 können, falls die zugeordneten Räder 43, 44 mittels eines Motors in an sich bekannter Weise antreibbar sind, gemeinsam mit dem Steuergerät 18 und den Ventilen 5, 6, 7, 8 zur Verminderung von Antriebsschlupf eingesetzt werden.

Je nach Anzahl der Achsen, die ein Fahrzeug hat, wird die dargestellte Fahrzeugbremsanlage 2 erweitert durch Zufügen von weiteren Radbremszylindern, Ventilen und Raddrehungssensoren. Aus Sicherheitsgründen können diesen zusätzlichen Radbremszylindern auch zusätzliche elektrische Bremsdrucksollwertgeber und Notbremsdruckgeber zugeordnet werden. Diese werden dann gemeinsam mit den Gebern 10, 11 mittels des Bremspedals 9 betätigt.

## Patentansprüche

1. Druckmittel-Fahrzeugbremsanlage (2) mit wenigstens einem Druckmittelspeicherbehälter (4), mit wenigstens einer an diesen angeschlossenen, Elektromagnete (22, 25, 33, 35) aufweisenden Ventilkombination (5-8), mit an diese angeschlossenen Radbremszylindern (12, 13), mit einem mittels eines Bremspedals (9) einstellbaren elektrischen Bremsdrucksollwertgeber (10), mit wenigstens einem den Radbremszylindern zugeordneten Druckfühler (14, 15), der Bremsdruckistwerte anzeigt, und mit einem an den Druckfühler und den elektrischen Bremsdrucksollwertgeber angeschlossenen elektrischen Steuergerät (18) zum Steuern der Ventilkombination zwecks Angleichens von Bremsdruckistwerten an Bremsdrucksollwerte, wobei wenigstens einem Rad (43, 44), das von dem Radbremszylinder (12, 13) gebremst wird, ein Raddrehungssensor (16, 17) zugeordnet ist, der mit dem Steuergerät (18) verbunden ist, das eingerichtet ist zur Ermittlung von Bremsschlupf ausgehend von aus dem Raddrehungssensor (16, 17) abgegebenen Raddrehungssignalen, zur Erkennung von unzulässig anwachsendem Bremsschlupf und zum Unterdrücken des Angleichens von Bremsdruckistwerten an Bremsdrucksollwerte bei unzulässig angewachsenem Bremsschlupf und zu dessen Verminderung durch Ansteuern der Ventilkombination (5-8), und mit einem mittels des Bremspedals betätigbaren Notbremsdruckgeber (11), der über eine Ventil unter kombination (5, 6) mit den Radbremszylindern verbindbar ist, dadurch gekennzeichnet, daß jedem Rad (43,44) ein Raddrehungssensor (16,17) zugeordnet ist, daß die mehrere Ventile aufweisende Ventilkombination (5-8) ein Ventil (7) für einen Radbremszylinder (12) eines rechten Rades (43) und ein weiteres Ventil (8) für einen Radbremszylinder (13) eines linken Rades (44) besitzt, daß diese beiden den Radbremszylindern zugeordneten Ventile (7, 8) jeweils drei Anschlüsse und vier Schaltstellungen haben, daß jeweils eine der Schaltstellungen der beiden Ventile (7, 8) eine Druckabsenkstellung zum Bremslösen für den Normalbremsbetrieb ist, bei der die Rabbremszylinder über die beiden Ventile (7,8) miteinander und mit den Auslaßanschlüssen (38,39) der beiden Ventile (7,8) verbunden sind, und daß das Steuergerät (18) eingerichtet ist zum gleichzeitigen Steuern dieser beiden Ventile (7, 8) in diese Druckabsenkstellung zum Bremslösen während Normalbremsungen.

## Claims

1. Pressure-medium-operated vehicle braking system (2) with at least one pressure-medium reservoir (4), with at least one valve combination (5-8) connected to the latter and having electromagnets (22, 25, 33, 35), with wheel-brake cylinders (12, 13) connected to the said combination, with an electric brake-pressure set point transmitter (10) adjustable by means of a brake pedal (9), with at least one pressure transducer (14, 15), which is assigned to the wheel-brake cylinders and indicates brake-pressure actual values, and with an electric control unit (18) connected to the pressure transducer and the electric brake-pressure set point transmitter and intended for controlling the valve combination in order to match brake-pressure actual values to brake-pressure set point values, at least one wheel (43, 44) braked by the wheel-brake cylinder (12, 13) being assigned a wheel-rotation sensor (16, 17) which is connected to the control unit (18), which is set up to determine brake slip on the basis of wheel-rotation signals emitted by the wheel-rotation sensor (16, 17), to recognise an impermissible rise in brake slip and to suppress the matching of brake-pressure actual values to brake-pressure set point values in the event of an impermissible rise in brake slip and to reduce it by activating the valve combination (5-8), and with an emergency brake-pressure transmitter (11), which can be actuated by means of the brake pedal and can be connected to the wheel-brake cylinders via a valve subcombination (5, 6), characterized in that each wheel (43, 44) is assigned a wheel-rotation sensor (16, 17), in that the valve combination (5-8), which has a plurality of valves, has a valve (7) for a wheel-brake cylinder (12) of a right-hand wheel (43) and a further valve (8) for a wheel-brake cylinder (13) of a left-hand wheel (44), in that these valves (7, 8) assigned to the two wheel-brake cylinders each have three ports and four positions, in that in each case one of the positions of the two valves (7, 8) is a pressure-reduction position for brake release in normal braking mode, in which the wheel-brake cylinders are connected to one another via the two valves (7, 8) and to the outlet ports (38, 39) of the two valves (7, 8), and in that the control unit (18) is set up to set these two valves (7, 8) simultaneously to this pressure-reduction position for brake release during normal braking episodes.

## Revendications

1. Installation de freinage de véhicules (2) par fluide sous pression, comportant au moins un réservoir de fluide sous pression (4) relié à au moins une combinaison de tiroirs (5-8) comportant des électro-aimants (22, 25, 33, 35) et des cylindres de frein de roue (12, 13) reliés à cette combinaison, un capteur de valeur de consigne de pression de freinage (10), électrique, réglable par une pédale de frein (9), au moins un capteur de pression (14, 15) associé aux cylindres des freins de roue, qui donne les valeurs réelles de la pression de freinage, ainsi qu'un dispositif de commande (18), électrique relié au capteur de pression et au capteur de pression de consigne de freinage, électrique, pour commander la combinaison des tiroirs afin d'adapter les valeurs réelles de la pression de freinage aux valeurs de consigne de la pression de freinage, un capteur de rotation de roue (16, 17) étant associé à au moins une roue (43, 44) freinée par le cylindre de frein de roue (12, 13), ce capteur (16, 17) étant relié au dispositif de commande (18) conçu pour déterminer le glissement de freinage en partant des signaux de rotation de roue fournis par le capteur de rotation de roue (16, 17), pour reconnaître un glissement de freinage, croissant de manière inacceptable et pour interdire l'égalisation entre les valeurs réelles et les valeurs de consigne de la pression de freinage, en cas de glissement de freinage croissant de manière inacceptable et le réduire par commande de la combinaison des tiroirs (5-8) et un capteur de frein de secours (11) actionné par la pédale de frein, qui peut être relié aux cylindres des freins de roue par une sous-combinaison de tiroirs (5, 6), installation caractérisée en ce qu'un capteur de rotation de roue (16, 17) est associé à chaque roue (43, 44), la combinaison de tiroirs (5-8) à plusieurs tiroirs comprend un tiroir (7) pour un cylindre (12) d'un frein de roue droite (43) et un autre tiroir (8) pour un cylindre de frein (13) d'une roue gauche (44), les deux tiroirs (7, 8) associés aux deux cylindres de freins de roue ayant chaque fois trois branchements et quatre positions de commutation, et en ce que chaque fois l'une des positions de commutation des deux tiroirs (7, 8) correspond à une position d'abaissement de pression pour libérer le frein pour le mode de freinage normal, les cylindres de freins de roue étant reliés par les deux tiroirs (7, 8) et avec les sorties (38, 39) des deux tiroirs (7, 8) et en ce que le dispositif de commande (18) est conçu pour commander simultanément les deux tiroirs (7, 8) dans cette position d'abaissement de pression pour libérer les freins pendant les freinages normaux.
